**Europäisches Patentamt**

**European Patent Office**

**Office européen des brevets**

(11) Veröffentlichungsnummer: **0 243 610**
**A1**

(12) ## EUROPÄISCHE PATENTANMELDUNG

(21) Anmeldenummer: **87102817.1**

(22) Anmeldetag: **27.02.87**

(51) Int. Cl.³: **A 01 G 9/02**
**A 01 G 9/10, B 65 D 85/52**

(30) Priorität: **03.03.86 DE 3606838**

(43) Veröffentlichungstag der Anmeldung:
**04.11.87 Patentblatt 87/45**

(84) Benannte Vertragsstaaten:
**AT BE CH FR GB LI NL**

(71) Anmelder: **Biedinger, Udo**
**Nibelungenstrasse 34**
**D-5030 Hermüllheim(DE)**

(71) Anmelder: **Schimanski, Jörg**
**Mühlenwinkelsweg 164**
**D-4100 Duisburg 46(DE)**

(72) Erfinder: **Biedinger, Udo**
**Nibelungenstrasse 34**
**D-5030 Hermüllheim(DE)**

(72) Erfinder: **Schimanski, Jörg**
**Mühlenwinkelsweg 164**
**D-4100 Duisburg 46(DE)**

(54) **Zusammensteckbare Vorrichtung zur Pflanzung und Ernte von Zwiebeln aller Art.**

(57) Zur vereinfachten Pflanzung, Ernte und Anordnung von Zwiebeln wird eine zusammensteckbare Vorrichtung verwendet, die aus Einheiten besteht, welche mit Hilfe einer bekannten Steckverbindung zu dem Grundelement Würfel zusammengefügt werden. Diese sind nach oben offen, ansonsten mit einer gitterförmigen Struktur versehen und können mit Hilfe einer bekannten Steckverbindung zu jeder beliebigen Fläche aneinandergefügt werden. Sie besitzen eine oberhalb des Erdreiches sichtbare Kennzeichnung, vorzugsweise in Form von herausragenden Stiften.

Fig. 1

Fig. 2

EP 0 243 610 A1

Namen der Anmelder: Jörg Schimanski, Mühlenwinkelsweg 164,
4100 Duisburg 46
Udo Biedinger, Nibelungenstraße 34,
5030 Hermülheim

<u>Beschreibung:</u>

Titel: Zusammensteckbare Vorrichtung zur Pflanzung und Ernte von Zwiebeln aller Art.

Gattung des
Anmeldegegenstandes: Die Erfindung betrifft eine zusammensteckbare Vorrichtung zur Pflanzung und
Ernte von Zwiebeln aller Art nach dem
Oberbegriff des Anspruchs 1.
Eine derartige Vorrichtung ist von grossem praktischem Interesse, denn sie ermöglicht eine effektivere und ökonomischere Pflanzung, Anordnung und Ernte
von Zwiebeln aller Art.

Stand der Technik: Es sind Pflanzschalen zur Pflanzung von
Zwiebeln bekannt.

Kritik des Standes
der Technik: Die bekannten Pflanzschalen haben jedoch den Nachteil, daß sie nur in bestimmten Größen und Formen existieren.
Dadurch können sie nur eine bestimmte
Anzahl von Zwiebeln aufnehmen, während
gleichzeitig eine optimale Flächenausnutzung bei einer von der Pflanzschale
abweichenden Form mißlingt.
Eine eindeutige Kennzeichnung der bepflanzten Fläche, die sowohl für eine
Wiederauffindung und Ernte als auch
für eine Nachkultur sinnvoll ist, wird

dabei nicht gewährleistet.
Eine Eingrenzung von Farbsortimenten ist durch die bauliche Gestaltung der Pflanzschale nur eingeschränkt möglich.

5. Aufgabe: _____ Die Erfindung hat sich zur Aufgabe gesetzt, diese Nachteile zu vermeiden und den zeitlichen Aufwand, der nicht nur durch Stecken, sondern auch bei Entfernen der Zwiebeln nach Absterben des oberirdischen Teils entsteht, zu verringern.

Lösung: Diese Aufgabe wird erfindungsgemäß durch eine zusammensteckbare Vorrichtung gelöst, die aus Einheiten besteht, welche mit Hilfe einer bekannten Steckverbindung zu Würfeln zusammengefügt werden. Diese Würfel werden vertikal durch Wegklappen des Bodenteils zu Quadern und/ oder horizontal mit Hilfe einer bekannten Steckverbindung zu jeder beliebigen Fläche, auf dem Grundelement Würfel basierend, aneinandergefügt.
Um auf einfache Weise eine jederzeitige Auffindung der Vorrichtung und damit der Blumenzwiebeln zu ermöglichen, besitzen die Grundelemente eine oberhalb des Erdreiches sichtbare Kennzeichnung, vorzugsweise in Form von herausragenden Stiften.

Weitere Ausgestaltung der Erfindung:

Die Elemente Würfel sind nach oben offen und ansonsten mit einer gitterför-

migen Struktur versehen.

Die Steckverbindungen, mit Hilfe derer die Würfel aneinandergefügt werden, befinden sich an zwei sich gegenüberliegenden Außenseiten und an der Oberseite des Grundelementes Würfel.

Die zur Kennzeichnung präferierten Stifte werden in dafür vorgesehene Aussparungen der Würfel gesteckt. Eine Grundfläche, die aus einer Anzahl von Würfeln besteht, bedarf dabei nicht der Markierung jedes einzelnen Würfels. Vielmehr genügt eine Kennzeichnung markanter Stellen, um die bepflanzte Fläche eindeutig kenntlich zu machen.

Erzielbare Vorteile: Ein Vorteil der Erfindung fällt insbesondere ins Gewicht, wenn der zeitliche Aufwand für Pflanzung und Ernte von Zwiebeln, insbesondere Blumenzwiebeln, betrachtet wird. Während bei einer Vielfachkombination von Würfeln zum einen bei der Pflanzung der Erdaushub für die Zwiebeln erleichtert wird, wird gleichzeitig der Abstand der Zwiebeln voneinander und die erforderliche Pflanztiefe für jede einzelne Zwiebel richtig gewählt.

Eine zusätzliche Zeitersparnis wird bei der Ernte wirksam. Die nach oben sichtbare Kennzeichnung ermöglicht zum einen nach Absterben des oberirdischen Teils der Pflanze eine sofortige Auffindbarkeit der Vorrichtung und damit der Zwiebeln, zum anderen eine schnelle und unkomplizierte Herausnahme aller Zwiebeln aus der Erde; die gitterförmige Struktur der Würfel sichert sogleich eine unproblematische Trennung
der Zwiebeln von der Erde durch einfaches Schütteln der Vorrichtung.
Ein weiterer Vorteil ergibt sich aus
der oberirdischen Kennzeichnung.
Diese vorzugsweise in Form von herausragenden Stiften gewählte Markierung
ermöglicht bei der Pflanzung neben der
Abgrenzung der Pflanzfläche eine Eingrenzung von gleichen Farbsortimenten.
Bei der Ernte wird die Vermischung der
Farbsortimente wirksam durch die bauliche Gestaltung der Vorrichtung und
deren Kennzeichnung verhindert.
Eine getrennte Lagerung der Farbsorten
ist somit vorab gesichert.
Die Möglichkeit einer vertikalen Aneinanderfügung von Würfeln erweitert die
Nutzbarkeit der Vorrichtung für tiefer
zu pflanzende Zwiebelsorten; die oben
beschriebenen Vorteile gelten in gleicher Weise.
Erforderlichenfalls können die Grundelemente Würfel zu jeder denkbaren Form
aneinandergefügt werden.

Zeichnungen mit Ausführungsbeispielen:

Die Erfindung ist in den Zeichnungen
dargestellt und wird im folgenden
näher beschrieben.

Es zeigen:

Figur 1 die Einheiten des Grundelementes
Würfel

Figur 2 das zusammengefügte Grundelement Würfel

Figur 3 die Wirkungsweise der Steckverbindungen bei horizontaler Aneinanderfügung mehrerer Grundelemente

Figur 4 die Vertikalkombination zweier
Grundelemente

Figur 5 die schematische Darstellung
der Vorrichtung im Erdreich als
Querschnitt

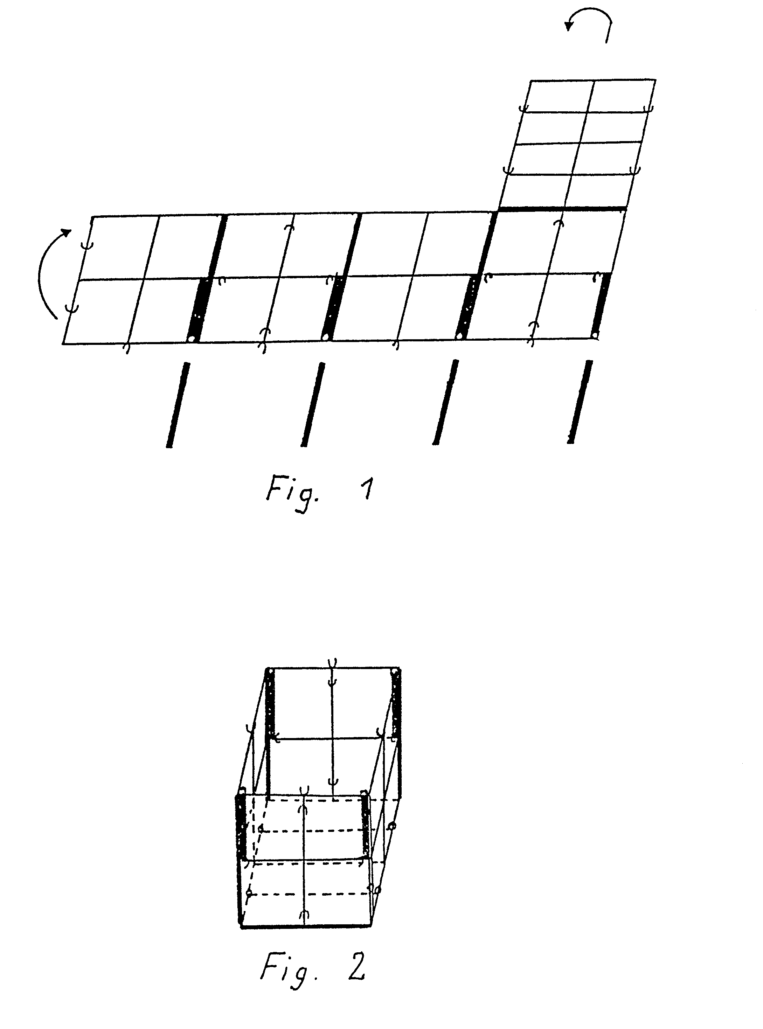

In Figur 1 ist das Grundelement Würfel
mit seinen fünf Einheiten und den möglichen Kennzeichnungen in Form von vier
Stiften, auseinandergebaut, dargestellt.
Die Zeichnung zeigt die Stifte vor entsprechenden Aussparungen, in welche sie
nach Bedarf gesteckt werden können.
Die Steckverbindungen, die schematisch
in Form von Halbkreisen (offen) bzw.
Kreisen (geschlossen) dargestellt sind,
ermöglichen einerseits die Zusammenfügung der Einheiten zum Grundelement
Würfel, welches zusammengefügt in Figur
2 dargestellt ist. Andererseits ermöglichen sie die Aneinanderfügung einer
Vielzahl von Grundelementen in horizontaler und/oder vertikaler Weise.
Zur Erfüllung dieses Zweckes befinden sie sich an zwei sich gegenüberliegenden Außenseiten und an der Oberseite des Grundelementes, wie durch
Figur 2 zu sehen ist.

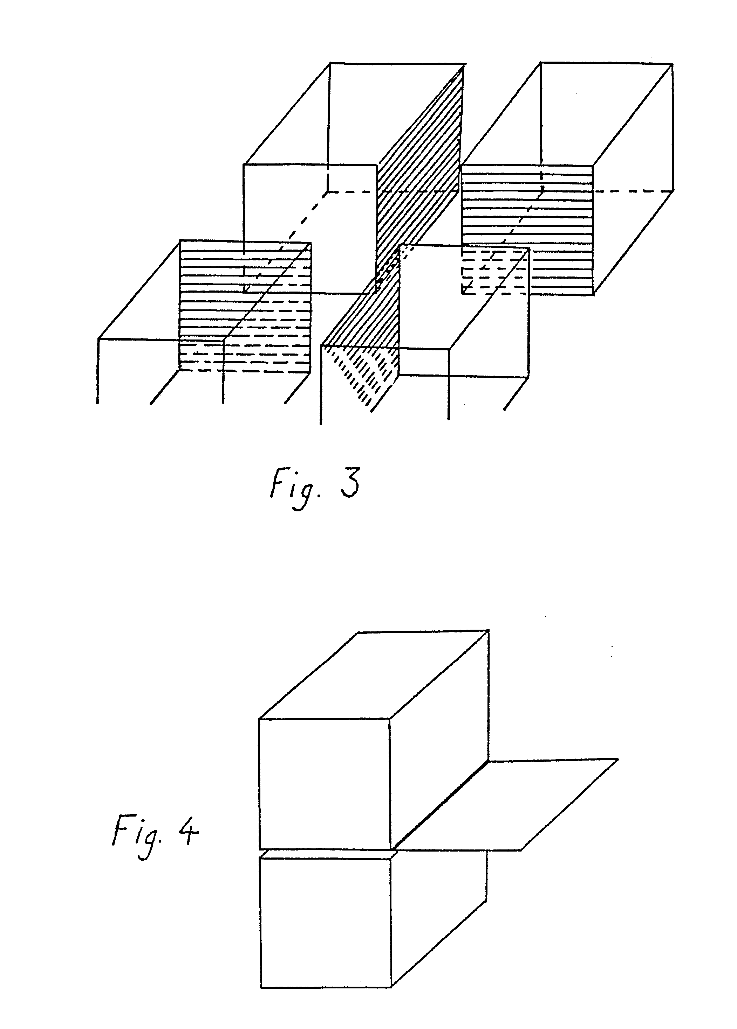

Figur 3 zeigt schematisch die Wirkungsweise derjenigen Steckverbindungen, die
bei einer Mehrfachkombination in horizontaler Richtung zur Anwendung kommen. Die Seiten, an denen diese Steckverbindungen liegen, sind durch
Schraffur kenntlich gemacht.

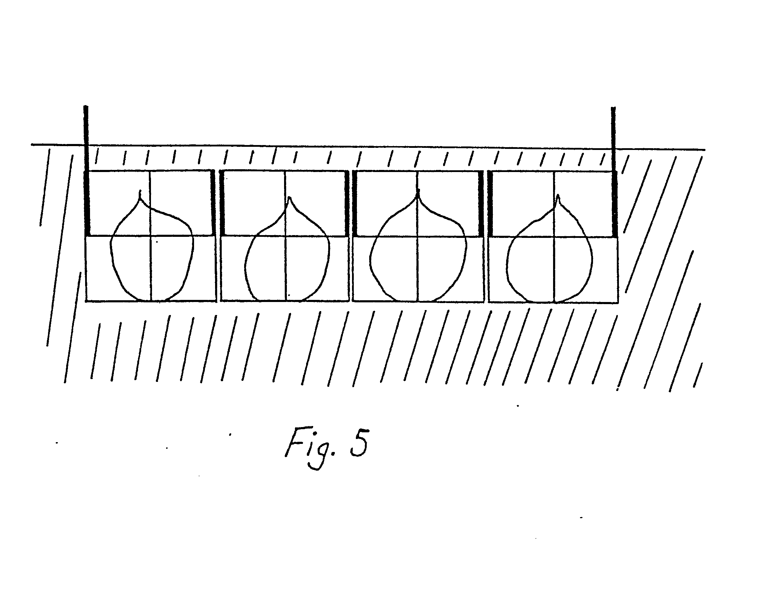

Figur 4 zeigt eine vertikale Aneinanderfügung von Grundelementen.

Figur 5, als Querschnittszeichnung,
zeigt beispielhaft die Anwendung der
Vorrichtung nach der Pflanzung. Die
oberhalb des Erdreiches sichtbare Kennzeichnung ist exemplarisch durch zwei
herausragende Stifte dargestellt.

Patentansprüche:

Oberbegriff:   1. Zusammensteckbare Vorrichtung zur Pflanzung und Ernte von Zwiebeln aller Art, bestehend aus Elementen in Form eines Würfels, die mit einer bekannten Steckverbindung einzeln oder vielfach kombinierbar sind,

Kennzeichnender
Teil:           dadurch gekennzeichnet, daß, vorzugsweise für Blumenzwiebeln, die mit Hilfe einer bekannten Steckverbindung zu Würfeln zusammengefügten Einheiten, vertikal durch Wegklappen des Bodenteils zu Quadern und/oder horizontal mit Hilfe einer bekannten Steckverbindung zu jeder beliebigen Fläche, auf dem Grundelement Würfel basierend, aneinandergefügt werden. Die Würfel besitzen eine oberhalb des Erdreiches sichtbare Kennzeichnung, vorzugsweise in Form von herausragenden Stiften.

Oberbegriff des
Unteranspruchs:  2. Zusammensteckbare Vorrichtung nach Anspruch 1,

Kennzeichnender
Teil des
Unteranspruchs:  dadurch gekennzeichnet, daß die Elemente Würfel nach oben offen und ansonsten mit einer gitterförmigen Struktur versehen sind. Die Steckverbindungen, mit Hilfe derer die Würfel aneinandergefügt werden, befinden sich an zwei sich gegenüberliegenden Außenseiten und an der Oberseite des Grundelementes.

Fig. 1

Fig. 2

0243610

Fig. 3

Fig. 4

0243610

Fig. 5

0243610

Europäisches
Patentamt

**EUROPÄISCHER RECHERCHENBERICHT**

Nummer der Anmeldung

EP 87 10 2817

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-1 470 266 (ART & MEDIA AG) * Seite 2, Zeilen 72-129; Seite 2; Seite 3, Zeilen 1-60; Figuren 1-11 * | 1,2 | A 01 G 9/02 A 01 G 9/10 B 65 D 85/52 |
| | --- | | |
| X | US-A-4 212 134 (BROKAMP) * Spalten 2,3; Figuren 1-5 * | 1,2 | |
| | --- | | |
| A | FR-A- 724 362 (MARCHAUDON) | | |
| | ----- | | |

**RECHERCHIERTE SACHGEBIETE (Int Cl 4)**

A 01 G
B 65 D

Der vorliegende Recherchenbericht wurde für alle Patentansprüche erstellt.

| Recherchenort | Abschlußdatum der Recherche | Prüfer |
|---|---|---|
| DEN HAAG | 27-07-1987 | VERMANDER R.H. |

 KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument